# EUROPEAN PATENT SPECIFICATION

(11) **EP 1 736 008 B1**
(45) Date of publication and mention of the grant of the patent: **10.10.2012**
(21) Application number: 05725907.9
(22) Date of filing: 18.03.2005
(51) Int. Cl.: H04W 36/18

(54) **COMMUNICATION VIA A WIRELESS LOCAL-AREA NETWORK**
KOMMUNIKATION ÜBER EIN DRAHTLOSES LOKALES NETZWERK
COMMUNICATION VIA UN RESEAU LOCAL SANS FIL

(30) Priority: 07.04.2004 US 819630
(43) Date of publication of application: 27.12.2006
(73) Proprietor: Motorola Mobility LLC, Libertyville, IL 60048 (US)
(72) Inventor: TELL, Daniel, F., Lake Forest, IL 60045 (US); CORDELL, Donald, P., Woodstock, IL 60098 (US); KINNAVY, Michael, J., Park Ridge, IL 60068 (US); MORGAN, William, K., Wauconda, IL 60884 (US)
(74) Representative: Openshaw, Paul Malcolm
(86) International application number: PCT/US2005/009126
(87) International publication number: WO 2005/101861

(56) References cited:
- EP-A- 0 719 064
- US-A1- 2001 024 430
- US-A1- 2002 085 516
- US-A1- 2002 085 516
- US-A1- 2002 151 306
- US-A1- 2004 038 697
- US-A1- 2005 135 311

## Description

### Field of the Invention

The present invention relates generally to wireless communication systems, and in particular to a method and apparatus for communicating via a wireless local-area network.

### Background of the Invention

Communication devices are currently being developed to take advantage of local access points for placing/receiving calls from near the access point. For example, Motorola Inc. is developing a dual-mode phone that operates using both a wireless local-area network (WLAN) protocol and a cellular protocol (e.g., GSM, CDMA, iDEN, ... , etc.). During operation, a local access point is utilized for placing/receiving calls within the geographic area of the access point, while a wide-area network (WAN) (preferably a cellular network) is utilized for placing/receiving calls when outside the coverage of the WAN. As is known in the art, communication with an access point takes place utilizing a much lower power level than communication with the WAN. This greatly increases battery life, as well as decreasing overall system interference.

Because communication with a WLAN takes place at such low power, a problem exists in that RF conditions can degrade very rapidly, causing a handover the WAN. For example, local RF conditions change so rapidly (such as a door closing) that the communication device may not be able to communicate via the WLAN, and will be forced to switch to the WAN. As is evident, it would be beneficial for any communication via a WLAN to be able to tolerate temporary degradations in communication without having to de-register with the WLAN. Therefore a need exists for a method and apparatus for communicating via a WLAN that can tolerate temporary degradations in RF conditions.

US 2002/151306 A1 discloses a mobile communication system including a network constituted of at least one switching center and a plurality of base stations, and a mobile station which communicates with the base stations simultaneously. The system permits varying transmission delay between the switching center and the base stations according to the type of services available to the mobile station. The object is to propose a communication which permits varying transmission delay according to the type of service currently employed, and to promptly recover a synchronization state even if an out-of-sync state happens. To attain the object, a memory means (mobile switching center processor) stores transmission delay characteristics corresponding to services which are available to the mobile station. Furthermore, a communication timing setting means (diversity handover trunk) determines the timing of communication for the base stations according to the transmission delay characteristic selected according to the service.

US 2002/085516 A1 discloses a Mobile Station (MS) that is able to vertically roam in either direction between two different networks, i.e. WWAN and WLAN. The MS is equipped with a dual mode Radio for WWAN and WLAN transmissions. The WLAN Radio is linked to a WLAN Enterprise Gateway Controller (EGC) via a first air link and the WWAN Radio is linked to a WWAN Base Transceiver Station (BTS) via a second air link.

### BRIEF DESCRIPTION OF THE DRAWINGS

FIG. 1 is a high-level block diagram of a wireless local-area network and a wide-area network.
FIG. 2 is a block diagram of a wireless local-area network and a wide-area network.
FIG. 3 illustrates delay caused by routing transmissions through a local-area network.
FIG. 4 is a more-detailed block diagram of various elements of FIG. 2 during data transmissions from the base station and the access point.
FIG. 5 is a more-detailed block diagram of various elements of FIG. 2 during data transmission from the mobile device of FIG. 2.
FIG. 6 is a flow chart showing operation of the wide-area network of FIG. 2 during downlink transmission.
FIG. 7 is a flow chart showing operation of the mobile device of FIG. 2 during uplink transmission.

### DETAILED DESCRIPTION OF THE DRAWINGS

To address the above-mentioned need a method and apparatus for communicating via a wireless local-area network is provided herein. During operation a device will utilize a wireless local-area network when within the coverage area of the wireless local-area network, and will utilize a wide-area network when outside of the coverage area of the wireless local-area network. The device will also utilize both the local-area, and wide-area networks for soft handoff purposes when both systems are available for communication.

Because communication can take place simultaneously with both the local-area and wide-area networks, a lower overall power can be utilized by the device when compared to the power necessary for sole communication with the wide-area network. In addition, because there exists redundancy in communication links, the local-area network can tolerate larger degradations in RF conditions than prior-art systems. Finally soft handoff avoids potential erasures (voice quality issues) associated with hard handoffs.

The present invention encompasses a method for communicating via a wireless local-area network as set out in independent claim 1.

The present invention additionally encompasses a wireless device as set out in independent claim 4.

The present invention additionally encompasses a selection and distribution unit as set out in independent claim 6.

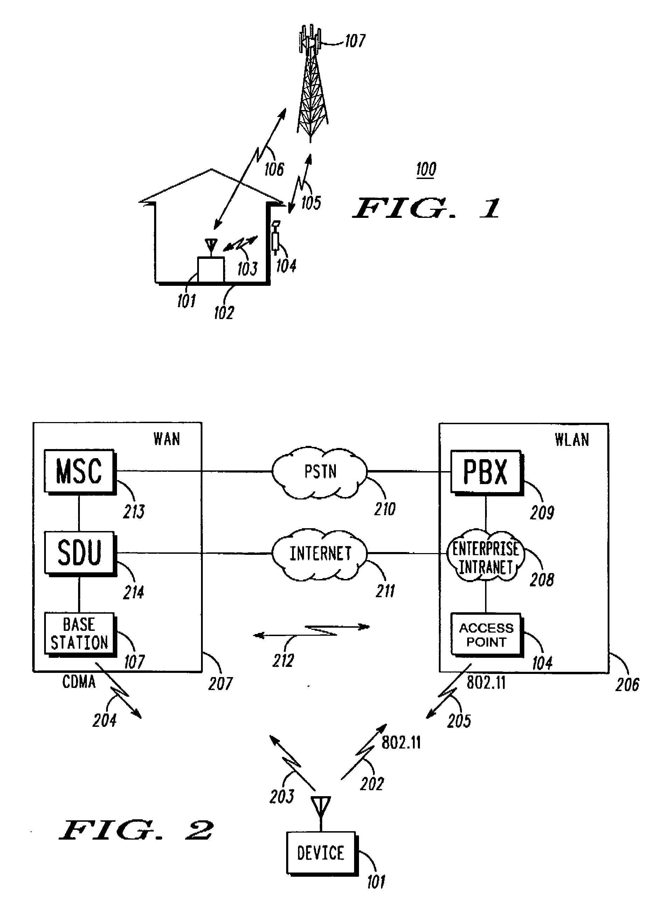

Turning now to the drawings, wherein like numerals designate like components, FIG. 1 is a block diagram of communication system 100. Base station 107 is preferably part of a cellular wide-area network employing one of several communication system protocols such as but not limited to a cellular network employing the CDMA system protocol, the GSM system protocol, the iDEN system protocol, ..., etc. Access point 104 is preferably part of a WLAN utilizing a wireless internet protocol (IP) such as, but not limited to an 802.11 protocol.

During operation, local access point 104 is utilized for placing/receiving calls within the geographic area of the access point (e.g., within building 102), while a wide-area network (e.g., a cellular network) is utilized for placing/receiving calls when outside the coverage of access point 104. As discussed above, because communication with access point 104 takes place at such low power, a problem exists in that RF conditions can degrade very rapidly, causing a handover to base station 107. In order to address this issue, in the preferred embodiment of the present invention device 101 utilizes simultaneous communication (i.e., soft handoff) with *both* access point 104 and base station 107.

FIG. 2 is a more-detailed block diagram of communication system 100. In FIG. 2, path 103 has been illustrated with uplink/downlink signals 202 and 205, while path 106 has been illustrated with uplink/downlink signals 203 and 204. In a similar manner, path 105 comprises one of links 210-212. As discussed, WAN 207 is preferably a cellular network employing a first communication system protocol, while WLAN 206 is preferably a wireless internet protocol (IP) based network utilizing a second communication system protocol such as, but not limited to an 802.11 protocol. In an alternate embodiment of the present invention WLAN 206 may simply comprise a signal repeater, simply repeating received signals.

Device 101 preferably comprises a dual-mode transceiver that is capable of communication with both WAN 207 and/or WLAN 206 via communication signals 203 and 202, respectively. Similarly, both WAN 207 and WLAN 206 are capable of communicating with device 101 via downlink communication signals 204 and 205, respectively. It should be noted that while device 101 is preferably a dual-mode cellular telephone, one of ordinary skill in the art will recognize that device 101 may comprise other dual-mode devices such as, but not limited to a personal digital assistant (PDA), a personal computer, or any device (voice, data, or video) that can operate in dual mode systems.

During operation device 101 will utilize WLAN 206 when within the coverage area of WLAN 206, and will utilize WAN 207 when outside of the coverage area of WLAN 206. Device 101 will also utilize both WLAN 206 and WAN 207 for soft handoff purposes when both systems are available for communication. When in coverage of WLAN 206, device 101 will access WLAN 206 through any number of access points 104 (only one shown in FIG. 2). As discussed, the system shown in FIG. 2 takes advantage of a mobile unit's ability to simultaneously receive/transmit communications from a plurality of transmitters. During such soft-handoff operation, transmissions from device 101 are simultaneously directed at least towards access point 104 and towards base station 107.

Eventually the uplink data transmitted via communication signals 202 and 203 reach selection and distribution unit (SDU) 214 where they are properly combined. Uplink communication signals 202 that are received via access point 104 may be routed to SDU 214 via one of several paths. For example, access point 104 may simply act as a wireless repeater by wirelessly re-broadcasting uplink communication signal 202 (via signal 212) to base station 107. Access point 104 may pass data received via uplink communication signal 202 through enterprise internet 208 to SDU 214 via internet 211. Finally, circuit-switched data may be directed towards SDU 214 by converting uplink communication signal 202 to circuit-switched data and passing the data through Private Branch Exchange (PBX) 209 to Public-Switched Telephone Network (PSTN) 210 and eventually to SDU 214 through MSC 213.

In a similar manner, device 101 may take advantage of soft handoff by simultaneously receiving downlink communication signals via base station 107 and access point 104. During such operation data exits SDU 214 and is directed towards base station 107, and eventually ends up at device 101 via downlink signal 204. Data may reach access point 104 via several signal paths. A first signal path simply exists through base station 107 to access point 104 via communication signal 212. A second signal path exists through internet 211 to access point 104 via intranet 208. Finally SDU may direct data to MSC 213 to PBX 209 through PSTN 210.

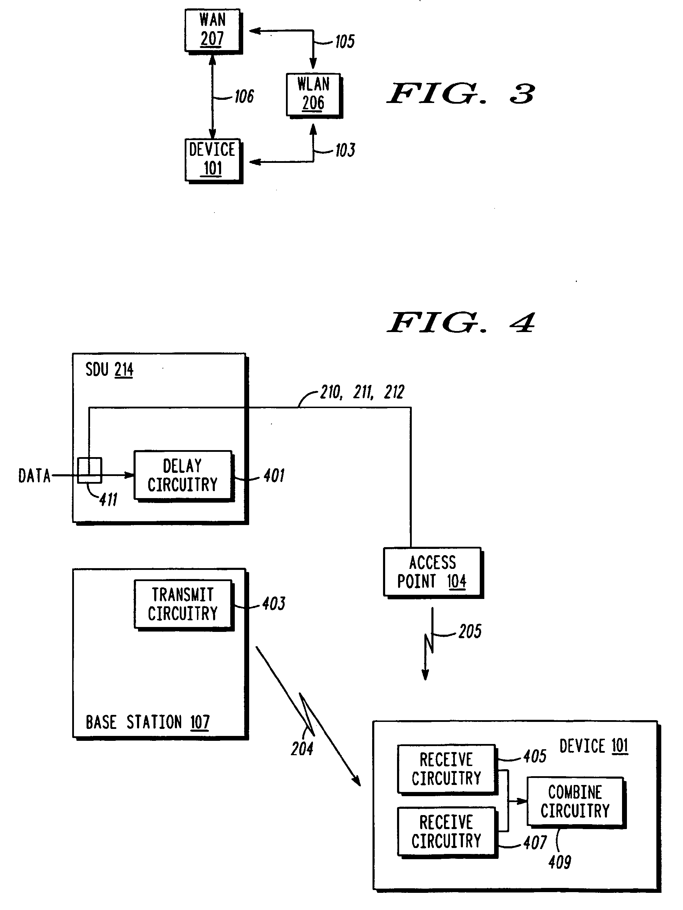

Regardless of the technique utilized for uplink and downlink soft handoff, data passing through WLAN 206 may be substantially delayed when compared to data that is transmitted/received through WAN 207. If the delay is too great, device 101 will be unable to use both signals for performing soft handoff. In order to address this issue, time-delay circuitry is utilized to delay all transmissions that are not directed through WLAN 206. By delaying transmissions not directed through WLAN 206, the communication signals entering SDU 214 can be appropriately time-aligned. This is illustrated in FIG. 3.

Referring to FIG. 3, path 106 comprises base station 107/device 101 link, and may comprise either uplink communication signal 203 or downlink communication signal 204. Similarly, path 103 comprises device 101/WLAN 206 link, and may comprise either uplink communication signal 202 or downlink communication signal 205. Finally, path 105 comprises the link between WLAN 206 and WAN 207. As discussed above, path 105 may utilize either communication signal 212, internet 211, or PSTN 210.

Assume "N" is the processing time required to translate data received on path 103 to data transmitted on path 105 and vice versa. Data transmitted over path 103 and 105 will require a longer time (N) to reach its destination when compared to data transmitted over path 106. This time difference must be corrected in order to perform soft handoff between WLAN 206 and WAN 207. "N" is a deterministic fixed delay in each direction. The fixed delay could be hard coded within the WLAN 206 and communicated back to the device 101 via messaging. The fixed delay is easily measured by sending known patterns and taking timing measurements. The WLAN supplier can then have this programmed into the WLAN device.

In the preferred embodiment of the present invention WLAN 206 communicates to both WAN 207 and device 101 the delay (N). Both device 101 and WAN 207 would delay their transmissions over path 106 by N. Thus, if data is available at time X for transmission over path 106, device 101 and WAN 207 will have to delay the transition over path 106 until time X+N. This would be the time when the WLAN 206 would first be able to transmit the data. Thus, WAN 207 and device 101 would receive both signals essentially simultaneously, allowing soft handoff to occur.

FIG. 4 is a more-detailed block diagram of various elements of FIG. 2 during data transmissions from the base station and the access point. During operation data is received at SDU 214 and is split into a plurality of redundant data streams by splitter 411. A redundant data stream is either delayed or not (via circuitry 401) based on whether or not the data is to be routed through WLAN 206. As is evident, delay circuitry 401 receives a redundant data stream and delays the data stream for a predetermined amount of time. In the preferred embodiment of the present invention delay circuitry 401 comprises a first-in-first-out buffer having an ability to vary the delay amount. However, in alternate embodiments of the present invention, delay circuitry 401 may comprise other forms of delay means.

As discussed above, the redundant data stream is delayed an amount of time equal to the processing time required to translate, or convert the data received on path 103 to the data transmitted on path 105 and vice versa. Both non-delayed redundant data and delayed redundant data exit SDU 214 where they are transmitted to a WLAN and a WAN, respectively. Non-delayed, and delayed redundant data streams enter access point 104 and base station 107, respectively.

As discussed above, path 105 may comprise one of many paths to access point 104. For simplicity, the various paths available for data exiting SDU 214 are not shown in FIG. 4. Delayed redundant data enters base station transmit circuitry 403 where it is transmitted to first receive circuitry 407 via over-the-air signal path 106. As discussed above, signal path 106 utilizes a first communication system protocol. In a similar manner non-delayed data enters access point 104 where it is transmitted to second received circuitry 405 utilizing a second communication system protocol. Once both data streams are received, device 101 outputs them to combine circuitry 409 where the streams are properly combined.

As discussed above, because passing data through access point 104 will add appreciable delay to any signal transmitted to device 101, soft handoff may be precluded. However, by delaying any transmission through base station 107, signals 103 and 106 will arrive at device 101 simultaneously, allowing for soft handoff to occur. Additionally, it should be noted that while FIG. 4 illustrates delay circuitry 401 existing within SDU 214, one of ordinary skill in the art will recognize that delay circuitry may also exist within base station 107 or transmit circuitry 403, as long as downlink signal 106 to device 101 is appropriately delayed.

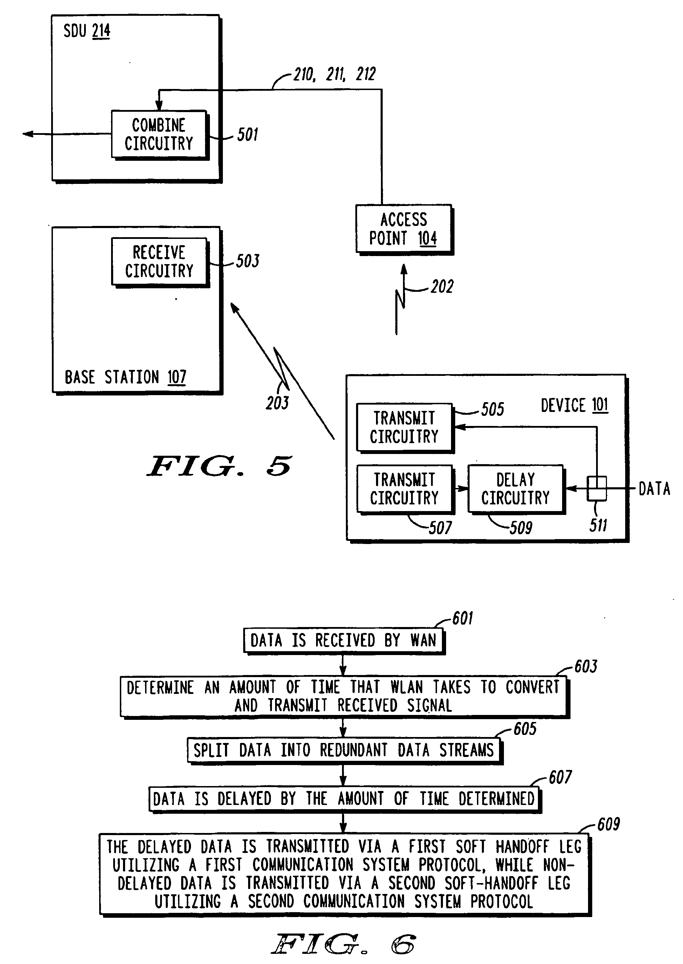

FIG. 5 is a more-detailed block diagram of various elements of FIG. 2 during data transmission from the mobile device of FIG. 2. As shown, data enters splitter 511 where it is split into a plurality of redundant data streams. Redundant data streams are passed to both delay circuitry 509 and first transmit circuitry 405. As discussed above, delay circuitry 509 serves to delay the data stream by an amount of time equal to the processing time required to translate data received on path 103 to data transmitted on path 105 and vice versa. The delayed data is then output to transmit circuitry 407. The delayed data and the non-delayed data streams are transmitted to base station receive circuitry 503 and access point 104, respectively. As discussed above, the transmission to the delayed and non-delayed data streams are transmitted utilizing differing communication system protocols. Eventually the delayed data and non-delayed data reach SDU combine circuitry 501.

FIG. 6 is a flow chart showing operation of the wide-area network of FIG. 2 during downlink transmission. The logic flow begins at step 601 where data is received by WAN 207 destined for device 101 via soft handoff links utilizing base station 107 and access point 104. At step 603, the data is split into a plurality of redundant data streams. At step 605 WAN 207 determines an amount of time necessary to translate path 103 to path 105 and vice versa. At step 607 data is transmitted through base station 107 is delayed by the amount of time determined at step 605. Finally, at step 609 the delayed data is transmitted via a first soft handoff leg utilizing a first communication system protocol, while non-delayed data is transmitted via a second soft-handoff leg utilizing a second communication system protocol.

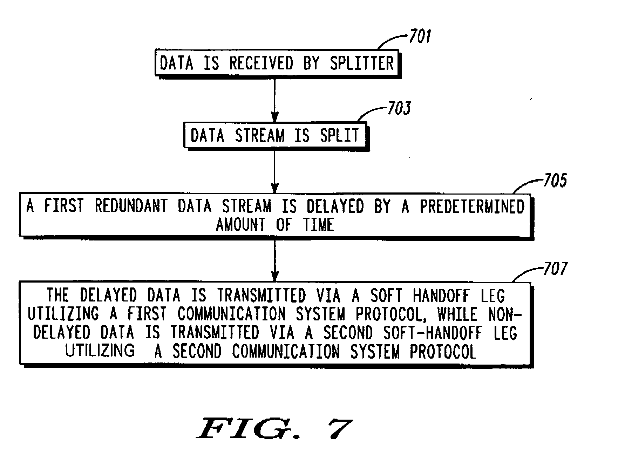

FIG. 7 is a flow chart showing operation of the mobile device of FIG. 2 during uplink transmission. The logic flow begins at step 701 where a data stream is received by splitter 511. At step 703, the data stream is split into a plurality of redundant data streams. At step 705 a first redundant data stream is delayed by a predetermined amount of time. The amount of time is predetermined, and is based on an amount of time necessary for WLAN 206 to convert and transmit the data received from uplink communication signal 202. Finally, at step 707 the delayed data stream is transmitted via a first soft handoff leg utilizing a first communication system protocol, while non-delayed data is transmitted via a second soft-handoff leg utilizing a second communication system protocol.

While the invention has been particularly shown and described with reference to a particular embodiment, it will be understood by those skilled in the art that various changes in form and details may be made therein without departing from the scope of the invention. For example, the above description was given with respect to delaying transmit times for signal paths not utilizing WLAN 206. One of ordinary skill in the art will recognize that the same results may be achieved by delaying the received signals at WAN 207 and device 101. Thus, in an alternate embodiment of the present invention, the transmissions from WAN 207 and device 101 are not delayed. Instead all received signals (not passing through WLAN 206) are delayed at the receiver so that they are received at the same time as signals passing through WLAN 206. Additionally, it is contemplated that the above system will not need to delay data at all when conversion times are adequate. It is intended that such changes come within the scope of the following claims.

## Claims

1. A method for communicating via a wireless local-area network, the method comprising the steps of:
receiving (601) bearer data;
splitting (605) the bearer data into a plurality of redundant data streams;
conveying (609) a first redundant data stream of the plurality of redundant data streams to a Wireless Local Area Network, WLAN;
conveying (609) a second redundant data stream of the plurality of redundant data streams to a Wide Area Network, WAN, wherein each data stream of the first and second redundant data streams comprises a leg of a soft handoff; and
delaying (607) the second redundant data stream transmitted to the WAN, wherein the second redundant stream is delayed by a time period needed for conversion of the first redundant data stream between a first system protocol associated with the WLAN and a second system protocol associated with the WAN.

2. The method of claim 1 wherein the steps of conveying the first and the second redundant data streams comprise the steps of:
transmitting the first redundant data stream to the WLAN utilizing the first communication system protocol; and
transmitting the second redundant data stream to the WAN utilizing the second communication system protocol.

3. The method of claim 1 wherein the step of conveying the first redundant data stream to the WLAN comprises conveying the first redundant data stream to a WLAN access point; and
wherein the step of transmitting the second redundant data stream to the WAN comprises conveying the second redundant data stream to a WAN base station.

4. A wireless user device (101) comprising:
a signal splitter (511) adapted to receive bearer data and split the bearer data into a plurality of redundant data streams;
first transmit circuitry (505) adapted to transmit a first redundant data stream of the plurality of redundant data streams to a Wireless Local-Area Network, WLAN;
second transmit circuitry (507) adapted to transmit a second redundant data stream of the plurality of redundant data streams to a Wide-Area Network, WAN, wherein each data stream of the first and second redundant data streams comprises a leg of a soft handoff; and
delay circuitry (509) adapted to delay the second redundant data stream by a time period needed for conversion of the first redundant data stream between a first system protocol associated with the WLAN and a second system protocol associated with the WAN.

5. The wireless user device of claim 4 wherein the first transmit circuitry is adapted to utilize a first communication system protocol and the second transmit circuitry is adapted to utilize a second communication system protocol.

6. A selection and distribution unit (214) comprising:
means for receiving a data stream;
means (411) for splitting the data stream into a plurality of redundant data streams;
means for conveying a first redundant data stream to a wireless Local-Area Network, WLAN, that employs a first communication system protocol; and
means for conveying a second redundant data stream to a Wide-Area Network, WAN, that employs a second communication system protocol:
delay circuitry (401) for delaying the second redundant data stream by a time period needed for conversion of the first redundant data stream between a first system protocol associated with the WLAN and a second system protocol associated with the WAN.

## Patentansprüche

1. Ein Verfahren für die Kommunikation über ein drahtloses lokales Netzwerk, wobei das Verfahren die folgenden Schritte umfasst:
Empfangen (601) von Trägerdaten;
Aufspalten (605) der Trägerdaten in eine Vielzahl von redundanten Datenströmen;
Übermitteln (609) eines ersten redundanten Datenstroms der Vielzahl von redundanten Datenströmen an ein drahtloses lokales Netzwerk, WLAN;
Übermitteln (609) eines zweiten redundanten Datenstroms der Vielzahl von redundanten Datenströmen an ein Weitbereichsnetzwerk, WAN, wobei jeder Datenstrom der ersten und zweiten redundanten Datenströme einen Abschnitt einer nahtlosen Übergabe umfasst; und
Verzögern (607) des zweiten redundanten Datenstroms, der an das WAN gesendet wird, wobei der zweite redundante Datenstrom durch eine Zeitspanne verzögert wird, die zur Umwandlung des ersten redundanten Datenstroms zwischen einem ersten Systemprotokoll, das mit dem WLAN assoziiert ist, und einem zweiten Systemprotokoll, das mit dem WAN assoziiert ist, erforderlich ist.

2. Das Verfahren nach Anspruch 1, wobei die Schritte des Übermittelns der ersten und der zweiten redundanten Datenströme die folgenden Schritte umfassen:
Senden des ersten redundanten Datenstroms an das WLAN unter Verwendung des ersten Kommunikationssystemprotokolls; und
Senden des zweiten redundanten Datenstroms an das WAN unter Verwendung des zweiten Kommunikationssystemprotokolls.

3. Das Verfahren nach Anspruch 1, wobei der Schritt des Übermittelns des ersten redundanten Datenstroms an das WLAN das Übermitteln des ersten redundanten Datenstroms an einen WLAN-Zugangspunkt umfasst; und
wobei der Schritt des Sendens des zweiten redundanten Datenstroms an das WAN das Übermitteln des zweiten redundanten Datenstroms an eine WAN-Basisstation umfasst.

4. Eine drahtlose Benutzervorrichtung (101), umfassend:
einen Signalaufspalter (511), der angepasst ist, Trägerdaten zu empfangen und die Trägerdaten in eine Vielzahl von redundanten Datenströmen aufzuspalten;
einen ersten Sendeschaltkreis (505), der angepasst ist, einen ersten redundanten Datenstrom der Vielzahl von redundanten Datenströmen an ein drahtloses lokales Netzwerk, WLAN, zu senden;
einen zweiten Sendeschaltkreis (507), der angepasst ist, einen zweiten redundanten Datenstrom der Vielzahl von redundanten Datenströmen an ein Weitbereichsnetzwerk, WAN, zu senden, wobei jeder Datenstrom der ersten und zweiten redundanten Datenströme einen Abschnitt einer nahtlosen Übergabe umfasst; und
einen Verzögerungsschaltkreis (509), der angepasst ist, den zweiten redundanten Datenstrom durch eine Zeitspanne zu verzögern, die zur Umwandlung des ersten redundanten Datenstroms zwischen einem ersten Systemprotokoll, das mit dem WLAN assoziiert ist, und einem zweiten Systemprotokoll, das mit dem WAN assoziiert ist, erforderlich ist.

5. Die drahtlose Benutzervorrichtung nach Anspruch 4, wobei der erste Sendeschaltkreis angepasst ist, ein erstes Kommunikationssystemprotokoll zu verwenden, und der zweite Sendeschaltkreis angepasst ist, ein zweites Kommunikationssystemprotokoll zu verwenden.

6. Eine Auswahl- und Verteilereinheit (214), umfassend:
Mittel zum Empfangen eines Datenstroms;
Mittel (411) zum Aufspalten des Datenstroms in eine Vielzahl von redundanten Datenströmen;
Mittel zum Übermitteln eines ersten redundanten Datenstroms an ein drahtloses lokales Netzwerk, WLAN, das ein erstes Kommunikationssystemprotokoll verwendet; und
Mittel zum Übermitteln eines zweiten redundanten Datenstroms an ein Weitbereichsnetzwerk, WAN, das ein zweites Kommunikationssystemprotokoll verwendet;
einen Verzögerungsschaltkreis (401) zum Verzögern des zweiten redundanten Datenstroms durch eine Zeitspanne, die zur Umwandlung des ersten redundanten Datenstroms zwischen einem ersten Systemprotokoll, das mit dem WLAN assoziiert ist, und einem zweiten Systemprotokoll, das mit dem WAN assoziiert ist, erforderlich ist.

## Revendications

1. Procédé de communication par un réseau local sans fil, le procédé comprenant les étapes de :
- réception (601) de données de porteuse ;
- division (605) des données de porteuse en une pluralité de flux de données redondants ;
- transport (609) d'un premier flux de données redondant de la pluralité de flux de données redondants à un réseau local sans fil, WLAN ;
- transport (609) d'un second flux de données redondant de la pluralité de flux de données redondants à un réseau étendu, WAN, chaque flux de données des premier et second flux de données redondants comprenant une branche d'un transfert intercellulaire sans coupure ; et
- retardement (607) du second flux de données redondant transmis au WAN, le second flux de données redondant étant retardé d'une période de temps nécessaire pour la conversion du premier flux de données redondant entre un premier protocole de système associé au WLAN et un second protocole de système associé au WAN.

2. Procédé selon la revendication 1, dans lequel les étapes de transport des premier et second flux de données redondants comprennent les étapes de :
- transmission du premier flux de données redondant au WLAN à l'aide du premier protocole de système de communication ; et
- transmission du second flux de données redondant au WAN à l'aide du second protocole de système de communication.

3. Procédé selon la revendication 1, dans lequel l'étape de transport du premier flux de données redondant au WLAN comprend le transport du premier flux de données redondant à un point d'accès WLAN ; et
dans lequel l'étape de transmission du second flux de données redondant au WAN comprend le transport du second flux de données redondant à une station de base WAN.

4. Dispositif utilisateur sans fil (101) comprenant :
- un diviseur de signaux (511) apte à recevoir des données de porteuse et à diviser les données de porteuse en une pluralité de flux de données redondants ;
- un premier circuit de transmission (505) apte à transmettre un premier flux de données redondant de la pluralité de flux de données redondants à un réseau de local sans fil, WLAN ;
- un second circuit de transmission (507) apte à transmettre un second flux de données redondant de la pluralité de flux de données redondants à un réseau étendu, WAN, chaque flux de données des premier et second flux de données redondants comprenant un branche d'un transfert intercellulaire sans coupure ; et
- un circuit de retard (509) apte à retarder le second flux de données redondant d'une période de temps nécessaire pour la conversion du premier flux de données redondant entre un premier protocole de système associé au WLAN et un second protocole du système associé au WAN.

5. Dispositif utilisateur sans fil selon la revendication 4, dans lequel le premier circuit de transmission est apte à utiliser un premier protocole de système de communication et le second circuit de transmission est apte à utiliser un second protocole de système de communication.

6. unité de sélection et de distribution (214) comprenant :
- des moyens pour recevoir un flux de données ;
- des moyens (411) pour diviser le flux de données en une pluralité de flux de données redondants ;
- des moyens pour transporter un premier flux de données redondant à un réseau local sans fil, WLAN, qui emploie un premier protocole de système de communication ; et
- des moyens pour transporter un second flux de données redondant à un réseau étendu, WAN, qui emploie un second protocole de système de communication ;
- un circuit de retard (401) pour retarder le second flux de données redondant d'une période de temps nécessaire pour la conversion du premier flux de données redondant entre un premier protocole de système associé au WLAN et un second protocole de système associé au WAN.
